**Europäisches Patentamt**

**European Patent Office**

**Office européen des brevets**

(19)

(11) Veröffentlichungsnummer: **0 088 048**
**B1**

(12) **EUROPÄISCHE PATENTSCHRIFT**

(45) Veröffentlichungstag der Patentschrift:
14.05.86

(21) Anmeldenummer: **83810071.7**

(22) Anmeldetag: **18.02.83**

(51) Int. Cl.⁴: **C 09 B 3/38,** C 09 B 3/32,
D 06 P 1/22

(54) Küpenfarbstoffe, erhältlich durch Bromieren von Dibenzanthron und Umsetzung mit 1-Aminoanthrachinon.

(30) Priorität: **24.02.82 CH 1133/82**

(43) Veröffentlichungstag der Anmeldung:
**07.09.83 Patentblatt 83/36**

(45) Bekanntmachung des Hinweises auf die Patenterteilung:
**14.05.86 Patentblatt 86/20**

(84) Benannte Vertragsstaaten:
**CH DE FR GB LI**

(56) Entgegenhaltungen:
**GB - A - 307 328**
**GB - A - 325 525**
**GB - A - 703 294**
**US - A - 1 949 209**

(73) Patentinhaber: **CIBA-GEIGY AG, Klybeckstrasse 141,
CH-4002 Basel (CH)**

(72) Erfinder: **Tzikas, Athanassios, Dr., Muttenzerstrasse 78,
CH-4133 Pratteln (CH)**

## Beschreibung

Die vorliegende Erfindung betrifft Küpenfarbstoffe, welche erhältlich sind, indem man Dibenzanthron unter speziellen Bedingungen bromiert und das Bromierungsprodukt mit 1-Aminoanthrachinon umsetzt, ein Verfahren zur Herstellung dieser Küpenfarbstoffe sowie deren Verwendung zum Färben von Cellulose.

Aus der britischen Patentschrift 703296 ist bereits bekannt, dass man Dibenzanthron in Gegenwart von wasserfreiem Aluminiumhalogenid mit Brom bromieren kann und in der britischen Patentschrift 703294 ist beschrieben, dass man das erhaltene Bromierungsprodukt mit 1-Aminoanthrachinon zu einem blauen Küpenfarbstoff umsetzen kann.

In der US-PS 2232700 sind Zwischenprodukte für die Herstellung eines höher kondensierten Küpenfarbstoffes beschrieben, welche durch Umsetzung von 1 Aequivalent Dibromdibenzanthron mit mindestens 2 Aequivalenten 1-Aminoanthrachinon erhalten werden. Das als Ausgangsstoff verwendete Dibromdibenzanthron wird durch Bromierung von Dibenzanthron in Chlorsulfonsäure mit elementarem Brom in Gegenwart einer kleinen Menge eines Halogenüberträgers, wie Schwefel oder Jod, hergestellt.

Die gemäss diesen Patentschriften aus bromiertem Dibenzanthron und 1-Aminoanthrachinon hergestellten Farbstoffe ergeben auf Cellulosematerial jedoch keine Färbungen in der gesuchten klaren, neutralen grauen bzw. schwarzen Nuance. Die Farbstoffe gemäss US-PS 2232700 ergeben rotstichig blaue Färbungen und die Färbungen mit den Farbstoffen gemäss GB-PS 703294 sind trübe. Zudem schmutzen diese Farbstoffe Polyestergewebe gelb an, so dass sie für Färbungen von Mischgeweben aus Cellulose und Polyester nur bedingt brauchbar sind.

Der vorliegenden Erfindung lag die Aufgabe zugrunde, graue bzw. schwarze Küpenfarbstoffe zur Verfügung zu stellen, welche Cellulosematerial in klarer, grauer bzw. schwarzer Nuance färben und welche beim Färben von Mischgewebe aus Cellulose und Polyester den Polyesteranteil nicht oder zumindest in der gleichen Nuance wie den Celluloseanteil färben.

Diese Aufgabe wird durch die erfindungsgemässen Farbstoffe gelöst. Es wurde gefunden, dass Konstitution und Eigenschaften der durch Umsetzung von bromiertem Dibenzanthron mit 1-Aminoanthrachinonen erhaltenen Farbstoffe von der Konstitution und damit vom Herstellungsverfahren des bromierten Dibenzanthrons sowie von den Bedingungen bei der Kondensation mit 1-Aminoanthrachinon abhängen.

Gegenstand der vorliegenden Erfindung sind Küpenfarbstoffe, welche Umsetzungsprodukte von bromiertem Dibenzanthron mit 1-Aminoanthrachinon darstellen, dadurch gekennzeichnet, dass sie erhältlich sind, indem man Dibenzanthron in 80- bis 100%iger Schwefelsäure mit Brom in Gegenwart eines Bromierungskatalysators bis zu einem Bromgehalt zwischen 24 und 32% bromiert und das Bromierungsprodukt mit 1,5 bis 2,0 Mol 1-Aminoanthrachinon je Mol bromiertes Dibenzantrhon umsetzt.

Ein weiterer Gegenstand der vorliegenden Erfindung ist ein Verfahren zur Herstellung von Küpenfarbstoffen, welche Umsetzungsprodukte von bromiertem Dibenzanthron mit 1-Aminoanthrachinon darstellen, dadurch gekennzeichnet, dass man Dibenzanthron in 80- bis 100%iger Schwefelsäure mit Brom in Gegenwart eines Bromierungskatalysators bis zu einem Bromgehalt zwischen 24 und 32% bromiert und das Bromierungsprodukt mit 1,5 bis 2,0 Mol 1-Aminoanthrachinon je Mol bromiertes Dibenzanthron umsetzt.

Die Bromierung wird vorzugsweise in 90- bis 100%iger, insbesondere in 96- bis 98%iger Schwefelsäure durchgeführt und es wird so viel Brom eingesetzt, dass nach Beendigung der Bromierung, d.h. wenn kein freies Brom mehr nachweisbar ist, das bromierte Dibenzanthron einen Bromgehalt zwischen 24 und 32%, vorzugsweise zwischen 26 und 30% aufweist. Dazu sind etwa 20 bis 25% weniger Brom als die theoretische Menge erforderlich, da unter den Reaktionsbedingungen das entstehende Bromid zum Teil zu Brom oxidiert wird und somit für die Reaktion erneut zur Verfügung steht.

Die Reaktionstemperatur bei der Bromierung liegt vorzugsweise etwa zwischen 60 und 110°C, insbesondere zwischen 80 und 105°C und die Reaktionsdauer beträgt etwa 5 bis 25 Stunden, bei Temperaturen zwischen 85 und 105°C etwa 10 bis 15 Stunden.

Die Bromierung wird in Gegenwart eines Bromierungskatalysators, wie z.B. $FeBr_3$, feinverteiltem Eisen oder insbesondere Jod durchgeführt, wobei etwa 0,1 bis 10 Gewichtsprozent, vorzugsweise 0,5 bis 2 Gewichtsprozent, bezogen auf Dibenzanthron, eingesetzt werden.

Nach Beendigung der Reaktion wird das bromierte Dibenzanthron auf übliche Weise isoliert, z.B. durch Eingiessen des Reaktionsgemisches in Eiswasser und Abfiltrieren des Rückstandes.

Das bromierte Dibenzanthron wird anschliessend mit 1-Aminoanthrachinon umgesetzt, wobei 1,5 bis 2,0 Mol, vorzugsweise 1,6 bis 1,9 Mol 1-Aminoanthrachinon je Mol bromiertes Dibenzanthron eingesetzt werden. Die Umsetzung erfolgt vorteilhaft in einem inerten Lösungsmittel, wie z.B. Nitrobenzol, und bei erhöhter Temperatur, beispielsweise bei etwa 180 bis 220°C.

Eine bevorzugte Ausführungsform besteht darin, dass man die Umsetzung in Gegenwart eines Säureakzeptors um eines Kondensationskatalysators durchführt.

Geeignete Säureakzeptoren sind z.B. Natrium- oder Kaliumhydroxid, -acetat oder -carbonat oder auch Mischungen dieser Verbindungen. Bevorzugt ist Natriumcarbonat.

Als Kondensationskatalysatoren kommen z.B. Kupferverbindungen, wie Kupferoxid oder vorzugsweise Kupfer-(I)-chlorid in Betracht.

Nach der Kondensationsreaktion wird der Farbstoff auf übliche Weise isoliert, beispielsweise indem man das Lösungsmittel durch Wasserdampfdestillation entfernt, danach den Farbstoff abfiltriert und trocknet.

Die nach dem vorstehend erläuterten Verfahren erhaltenen Küpenfarbstoffe eignen sich zum Färben und Bedrucken der verschiedensten Materialien in grauen oder schwarzen Nuancen, insbesondere zum Färben und Bedrucken von Fasern aus natürlicher oder regenerierter Cellulose in Gegenwart von Reduktionsmitteln, wie z.B. Dithionit. Die Farbstoffe zeichnen sich durch ein sehr gutes Aufbauvermögen aus. Die erhaltenen Färbungen zeichnen sich durch gute Egalität und einen klaren Farbton aus. Die Echtheiten sind allgemein sehr gut, insbesondere die Licht-, Wasser-, Chlor- und Sodakochechtheiten.

Ein besonderer Vorteil der erfindungsgemässen Küpenfarbstoffe besteht darin, dass Polyestergewebe gar nicht oder nur geringfügig grau angeschmutzt wird, so dass sich die Farbstoffe sehr gut zum Färben von Mischgeweben aus Cellulose und Polyester eignen.

In den nachfolgenden Beispielen bedeuten Teile Gewichtsteile und Prozente Gewichtsprozente. Die Temperaturen sind in Grad Celsius angegeben.

Beispiel 1
A) Bromierung von Dibenzanthron
In einem Rührkolben werden 994 Teile Schwefelsäure 98%ig sowie 2 Teile Jod vorgelegt und unter Rühren 200 Teile Dibenzanthron langsam eingetragen, wobei die Temperatur von selbst auf 40 bis 45° ansteigt. Man erwärmt das Reaktionsgemisch auf 85 bis 90° und lässt bei dieser Temperatur innert 6 Stunden 124 Teile Brom zutropfen. Man rührt noch weitere 3 Stunden bei 85 bis 90° sowie 3 Stunden bei 100 bis 105°.

Nach Abkühlen auf 55 bis 60° lässt man das Reaktionsgemisch unter Aussenkühlung in 1200 Teile Eiswasser einfliessen und filtriert den ausgefallenen Niederschlag. Man wäscht mit warmem Wasser neutral und trocknet im Vakuum bei 80 bis 90°.

Ausbeute: 245 Teile, bromiertes Dibenzanthron. Bromgehalt: 29,1%.

B) Umsetzung mit 1-Aminoanthrachinon
In 1800 Teile Nitrobenzol werden unter Rühren nacheinander 80 Teile wasserfreies Natriumcarbonat, 150 Teile des gemäss A erhaltenen bromierten Dibenzanthrons und 95 Teile 1-Aminoanthrachinon eingetragen. Man erwärmt das Reaktionsgemisch auf 195 bis 205° und gibt innerhalb von 5 Stunden portionenweise 14 Teile Kupfer-(I)-chlorid zu. Man rührt noch weitere 6 Stunden bei 195 bis 205°, lässt auf 80° abkühlen und entfernt anschliessend das Nitrobenzol durch eine Wasserdampfdestillation. Danach wird der Rückstand abfiltriert, mit heissem Wasser neutral und bromidfrei gewaschen und im Vakuum bei 100° getrocknet.

Man erhält 221 Teile Farbstoff, welcher Baumwolle grau bzw. schwarz färbt.

Der Farbstoff weist einen Stickstoffgehalt von 3,0% (Theorie 3,1%) und einen Bromgehalt von weniger als 0,5% (Theorie 0,0%) auf. Das Massenspektrum zeigt einen m/e Wert von 899 (Molekülpeak).

Beispiele 2–4
Arbeitet man wie im Beispiel 1 beschrieben, setzt jedoch die in Spalte 2 der folgenden Tabelle angegebene Menge bromiertes Dibenzanthron, welches den in Spalte 3 verzeichneten Bromgehalt aufweist, mit der in Spalte 4 aufgeführten Menge 1-Aminoanthrachinon um, so erhält man Farbstoffe, die Baumwolle in der in der letzten Spalte angegebenen Nuance färben.

| Beispiel | Teile bromiertes Dibenzanthron | Bromgehalt [%] | Teile 1-Amino-anthrachinon | Nuance |
|---|---|---|---|---|
| 2 | 150 | 26 | 85 | grau |
| 3 | 150 | 27 | 95 | grau |
| 4 | 150 | 32 | 95 | blaustichig grau |

Beispiel 5
A) 2 Teile des gemäss Beispiel 1 erhaltenen Farbstoffes werden mit 10 Volumteilen Natronlauge von 36°Bé und 5 Teilen Natriumhydrosulfit in 200 Teilen Wasser bei 50 bis 70° verrührt. Einem Färbebad, das in 2000 Teilen Wasser 5 Volumteile Natronlauge 36°Bé und 3,7 Teile Natriumhydrosulfit enthält, gibt man die obige Stammküpe zu und geht bei 40° mit 100 Teilen Baumwolle ein. Nach 10 Minuten gibt man 15 Teile Natriumchlorid zu, nach 20 Minuten weitere 15 Teile und färbt bei 40° während 45 Minuten. Hierauf wird die Baumwolle abgequetscht, oxidiert und wie üblich fertiggestellt. Sie ist in mittlerem klarem Grau mit sehr guten Echtheiten gefärbt.

B) Arbeitet man genau wie oben beschrieben, verwendet jedoch als Farbstoff 2 Teile des gemäss Beispiel 1 der britischen Patentschrift 703 294 hergestellten Farbstoffes, so erhält man grau gefärbte Baumwolle, welche eine deutlich trübere Nuance aufweist, als die oben beschriebene Färbung mit dem erfindungsgemäss hergestellten Farbstoff.

Beispiel 6
A) 1 Teil eines feindispersen Farbstoffpulvers mit einem Gehalt von 50% des nach Beispiel 1 erhaltenen Farbstoffes und 1 Teil eines handelsüblichen anionischen Dispergiermittels werden in 200 Teile Wasser eingetragen und der pH-Wert durch Zugabe von 2 Teilen Mononatriumphosphat auf 6,0 bis 6,4 gestellt.

In dieses Färbebad geht man bei 50° mit 10 Teilen eines Würfel-Mischgewebes aus Polyester und Baumwolle (65/35) ein und erwärmt innert 45 Minuten auf 125°. Man färbt 60 Minuten im geschlossenen Gefäss bei dieser Temperatur, lässt danach auf 60° abkühlen und gibt 2 Volumteile Natronlauge von 36°Bé und 1 Teil Natriumhydrosulfit zu. Man färbt weitere 30 Minuten bei 60°, danach wird das Gewebe oxidiert und wie üblich fertiggestellt.

Auf dem erhaltenen Mischgewebe ist der Baumwollanteil blaustichig grau gefärbt, die Polyesterreserve ist sehr gut, der Polyesteranteil ist nur geringfügig grau angeschmutzt.

B) Arbeitet man genau wie oben beschrieben, verwendet jedoch als Farbstoff die gleiche Menge des nach Beispiel 1 der britischen Patentschrift 703 294 hergestellten Farbstoffes, so erhält man Mischgewebe, bei dem der Baumwollanteil blaustichig grau gefärbt ist, wobei jedoch die Färbung deutlich trüber ist als die gemäss A) erhaltene Färbung. Der Polyesteranteil ist schmutzig gelb angeschmutzt.

## Patentansprüche

1. Küpenfarbstoffe, welche Umsetzungsprodukte von bromiertem Dibenzanthron mit 1-Aminoanthrachinon darstellen, dadurch gekennzeichnet, dass sie erhältlich sind, indem man Dibenzanthron in 80- bis 100%iger Schwefelsäure mit Brom in Gegenwart eines Bromierungskatalysators bis zu einem Bromgehalt zwischen 24 und 32% bromiert und das Bromierungsprodukt mit 1,5 bis 2,0 Mol 1-Aminoanthrachinon je Mol bromiertes Dibenzanthron umsetzt.

2. Küpenfarbstoffe gemäss Anspruch 1, erhältlich, indem man die Bromierung in 90- bis 100%iger, vorzugsweise 96- bis 98%iger Schwefelsäure durchführt.

3. Küpenfarbstoffe gemäss Anspruch 1 oder 2, erhältlich, indem man die Bromierung bis zu einem Bromgehalt zwischen 26 und 30% durchführt.

4. Küpenfarbstoffe gemäss einem der Ansprüche 1 bis 3, erhältlich, indem man als Bromierungskatalysator Jod verwendet.

5. Küpenfarbstoffe gemäss einem der Ansprüche 1 bis 4, erhältlich, indem man das Bromierungsprodukt mit 1,6 bis 1,9 Mol 1-Aminoanthrachinon je Mol bromiertes Dibenzanthron umsetzt.

6. Verfahren zur Herstellung von Küpenfarbstoffen, welche Umsetzungsprodukte von bromiertem Dibenzanthron mit 1-Aminoanthrachinon darstellen, dadurch gekennzeichnet, dass man Dibenzanthron in 80- bis 100%iger Schwefelsäure mit Brom in Gegenwart eines Bromierungskatalysators bis zu einem Bromgehalt zwischen 24 und 32% bromiert und das Bromierungsprodukt mit 1,5 bis 2,0 Mol 1-Aminoanthrachinon je Mol bromiertes Dibenzanthron umsetzt.

7. Verfahren gemäss Anspruch 6, dadurch gekennzeichnet, dass man die Bromierung in 90- bis 100%iger, vorzugsweise 96- bis 98%iger Schwefelsäure durchführt.

8. Verfahren gemäss Ansprüchen 6 oder 7, dadurch gekennzeichnet, dass man die Bromierung bis zu einem Bromgehalt zwischen 26 und 30% durchführt.

9. Verfahren gemäss einem der Ansprüche 6 bis 8, dadurch gekennzeichnet, dass man als Bromierungskatalysator Jod verwendet.

10. Verfahren gemäss einem der Ansprüche 6 bis 9, dadurch gekennzeichnet, das man das Bromierungsprodukt mit 1,6 bis 1,9 Mol 1-Aminoanthrachinon je Mol bromiertes Dibenzanthron umsetzt.

11. Verfahren gemäss einem der Ansprüche 6 oder 10, dadurch gekennzeichnet, das man die Umsetzung des bromierten Dibenzanthrons mit dem 1-Aminoanthrachinon in Gegenwart eines Säureakzeptors und eines Kondensationskatalysators durchführt.

12. Verfahren gemäss Anspruch 11, dadurch gekennzeichnet, dass man als Säureakzeptor Natriumcarbonat und als Kondensationskatalysator eine Kupferverbindung verwendet.

13. Verwendung der Küpenfarbstoffe gemäss Anspruch 1 zum Färben oder Bedrucken, insbesondere zum Färben von Cellulosematerial.

## Claims

1. A vat dye which is a reaction product of brominated dibenzanthrone with 1-aminoanthraquinone and is obtainable by brominating dibenzanthrone with bromine in 80−100% sulfuric acid and in the presence of a bromination catalyst to a bromine content of 24 to 32%, and reacting the bromination product with 1.5 to 2.0 moles of 1-aminoanthraquinone per mole of brominated dibenzanthrone.

2. A vat dye according to claim 1 which is obtainable by carrying out the bromination in sulfuric acid having a concentration of 90−100% preferably of 96−98%.

3. A vat dye according to either claim 1 or claim 2, which is obtainable by carrying out the bromination to a bromine content of 26 to 30%.

4. A vat dye according to any one of claims 1 to 3, which is obtainable by using iodine as bromination catalyst.

5. A vat dye according to any one of claims 1 to 4, which is obtainable by reacting the bromination product with 1.6 to 1.9 moles of 1-aminoanthraquinone per mole of brominated dibenzanthrone.

6. A process for the preparation of a vat dye which is a reaction product of brominated dibenzanthrone with 1-aminoanthraquinone, which process comprises brominating dibenzanthrone with bromine in 80−100% sulfuric acid and in the presence of a bromination catalyst to a bromine content of 24 to 32%, and reacting the bromination product with 1.5 to 2.0 moles of 1-aminoanthraquinone per mole of brominated dibenzanthrone.

7. A process according to claim 6, which comprises carrying out the bromination in sulfuric acid having a concentration of 90−100%, preferably of 96−98%.

8. A process according to either claim 6 or claim 7, which comprises carrying out the bromination to a bromine content of 26 to 30%.

9. A process according to any one of claims 6 to 8, wherein iodine is used as bromination catalyst.

10. A process according to any one of claims 6 to 9, which comprises reacting the bromination product with 1.6 to 1.9 moles of 1-aminoanthraquinone per mole of brominated dibenzanthrone.

11. A process according to either claim 6 or claim 10, which comprises carrying out the reaction of brominated dibenzanthrone with 1-aminoanthraquinone in the presence of an acid acceptor and of a condensation catalyst.

12. A process according to claim 11, wherein sodium carbonate is used as acid acceptor and a copper compound as condensation catalyst.

13. Use of a vat dye as claimed in claim 1 for dyeing or printing, in particular for dyeing cellulosic material.

## Revendications

1. Des colorants de cuve, qui représentent des produits de réaction d'une dibenzanthrone bromée avec une 1-aminoanthraquinone, caractérisés en ce qu'on peut les obtenir en bromant une dibenzanthrone avec du brome dans de l'acide sulfurique à 80 à 100%, en présence d'un catalyseur de bromation, jusqu'à obtenir une teneur en brome comprise entre 24 et 32%, et en faisant réagir le produit de bromation avec de 1,5 à 2,0 moles de 1-aminoanthraquinone par mole de dibenzanthrone bromée.

2. Colorants de cuve selon la revendication 1, que l'on peut obtenir en effectuant la bromation dans de l'acide sulfurique à 90 à 100%, de préférence à 96 à 98%.

3. Colorants de cuve selon la revendication 1 ou 2, que l'on peut obtenir en effectuant la bromation jusqu'à obtenir une teneur en brome comprise entre 26 et 30%.

4. Colorants de cuve selon l'une des revendications 1 à 3, que l'on peut obtenir en utilisant l'iode comme catalyseur de bromation.

5. Colorants de cuve selon l'une des revendications 1 à 4, que l'on peut obtenir en faisant réagir le produit de bromation avec de 1,6 à 1,9 mole de 1-aminoanthraquinone par mole de dibenzanthrone bromée.

6. Procédé pour la préparation de colorants de cuve, qui représentent des produits de réaction d'une dibenzanthrone bromée avec une 1-aminoanthraquinone, caractérisé en ce que l'on brome la dibenzanthrone dans de l'acide sulfurique à 80 à 100% avec du brome, en présence d'un catalyseur de bromation, jusqu'à obtenir une teneur en brome comprise entre 24 et 32%, et on fait réagir le produit de bromation avec de 1,5 à 2,0 moles de 1-aminoanthraquinone par mole de dibenzanthrone bromée.

7. Procédé selon la revendication 6, caractérisé en ce que l'on effectue la bromation dans de l'acide sulfurique à 90 à 100%, de préférence à 96 à 98%.

8. Procédé selon les revendications 6 ou 7, caractérisé en ce que l'on effectue la bromation jusqu'à obtenir une teneur en brome comprise entre 26 et 30%.

9. Procédé selon l'une des revendications 6 à 8, caractérisé en ce que l'on utilise de l'iode comme catalyseur de bromation.

10. Procédé selon l'une des revendications 6 à 9, caractérisé en ce que l'on fait réagir le produit de bromation avec de 1,6 à 1,9 mole de 1-aminoanthraquinone par mole de dibenzanthrone bromée.

11. Procédé selon l'une des revendications 6 ou 10, caractérisé en ce que l'on effectue la réaction de la dibenzanthrone bromée avec la 1-aminoanthraquinone en présence d'un accepteur d'acide et d'un catalyseur de condensation.

12. Procédé selon la revendication 11, caractérisé en ce que l'on utilise du carbonate de sodium en tant qu'accepteur d'acide, et un composé du cuivre comme catalyseur de condensation.

13. Utilisation des colorants de cuve selon la revendication 1 pour des teintures ou des impressions, en particulier pour des teintures de matériaux cellulosiques.